(19) Europäisches Patentamt
European Patent Office
Office européen des brevets

(11) EP 3 239 240 B1

(12) **EUROPEAN PATENT SPECIFICATION**

(45) Date of publication and mention of the grant of the patent:
**29.04.2020 Bulletin 2020/18**

(21) Application number: **14909074.8**

(22) Date of filing: **26.12.2014**

(51) Int Cl.:
***B29C 45/00*** (2006.01) ***B29C 45/14*** (2006.01)
***C08L 81/02*** (2006.01) ***C08J 5/00*** (2006.01)
***G01M 3/06*** (2006.01) *B29K 81/00* (2006.01)
*B29L 31/34* (2006.01) *B29K 105/16* (2006.01)
*B29L 31/36* (2006.01)

(86) International application number:
**PCT/JP2014/084579**

(87) International publication number:
**WO 2016/103470 (30.06.2016 Gazette 2016/26)**

(54) **POLYARYLENE SULFIDE RESIN COMPOSITION AND INSERT MOLDED ARTICLE**

POLYARYLENSULFIDHARZZUSAMMENSETZUNG UND UMSPRITZARTIKEL

COMPOSITION DE RÉSINE DE SULFURE DE POLYARYLÈNE ET ARTICLE MOULÉ SUR PRISONNIER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.11.2017 Bulletin 2017/44**

(73) Proprietor: **Polyplastics Co., Ltd.**
**Tokyo 108-8280 (JP)**

(72) Inventor: **YORIFUJI, Daisuke**
**Fuji-shi**
**Shizuoka 416-8533 (JP)**

(74) Representative: **Lux, Berthold**
**Maiwald Patentanwalts- und Rechtsanwaltsgesellschaft mbH**
**Elisenhof**
**Elisenstraße 3**
**80335 München (DE)**

(56) References cited:
**EP-A1- 2 511 344**
**WO-A1-2011/070968**
**JP-A- H0 532 896**
**JP-A- H1 121 456**
**JP-A- S6 121 156**
**JP-A- H11 335 556**
**JP-A- 2002 003 716**
**JP-A- 2003 176 410**
**JP-A- 2005 161 693**
**JP-A- 2011 016 942**
**JP-A- 2011 063 707**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 239 240 B1

## Description

TECHNICAL FIELD

The present invention relates to a polyarylene sulfide resin composition and an insert molded article.

BACKGROUND ART

Polyarylene sulfide resins, represented by a polyphenylene sulfide resin, have high heat resistance, mechanical properties, chemical resistance, dimensional stability, and flame resistance. Therefore, polyarylene sulfide resins are widely used as materials for parts of electrical/electronic devices, vehicle devices, chemical devices, and the like, and in particular used for applications used under high-temperature environments.

Moreover, insert molded articles in each of which an insert member made of metal, alloy, or the like is integrated with a resin member composed of a thermoplastic resin composition are traditionally used for interior members such as a console box around the instrument panel, engine-related parts, and interior parts of automotives; interface connections and externally exposed members such as power-supply terminals of electronic devices such as digital cameras and cellular phones. Polyarylene sulfide resins are also used as materials for manufacturing these insert molded articles.

Methods of integrating an insert member with a resin member include those in which they are joined via a bonding surface having pre-formed fine unevenness at the side of an insert member by virtue of the anchor effect; in which they are bonded with an adhesive or a double-sided tape; in which an insert member and a resin member are joined together through a securing member such as a fold-over tab or nail provided at the insert member and/or the resin member; in which they are joined with a screw and the like; and the like. Among these, a method involving formation of fine unevenness on an insert member and a method involving use of an adhesive are effective in terms of the degree of freedom for designing a metal-resin composite molded body.

In particular, the method in which the surface of an insert member is processed to form fine unevenness is advantageous because an expensive adhesive is not required. As a method of manufacturing an insert molded article using an insert member processed in a way as described above, known is a method of manufacturing an insert molded article using an insert metal member and a polyarylene sulfide resin composition, in which the insert metal member has a surface roughening region on a surface thereof through which the insert metal member is to be joined to a resin member, and the surface roughening region is formed so as to satisfy specific conditions (see Japanese Unexamined Patent Application,

Publication No. 2014-133407). A high degree of airtightness is often required for an insert molded article. The above method can provide an insert molded article having very good airtightness.

JP 2011-016942 discloses a polyarylene sulfide resin composition comprising: 29-68.9 wt.% of an amino group-containing polyarylene sulfide (A) having 0.05-3 mol% of an amino group per an arylene sulfide unit, a melt viscosity of 200-800 poises, and a crystallization temperature of less than 220°C; 15-30 wt. % of a fibrous filler (B); 15-30 wt. % of a granular filler (C); 1-8 wt. % of an ethylenic copolymer (D); and 0.1-3 wt. % of a mold release material (E).

DISCLOSURE OF THE INVENTION

Problems to be Solved by the Invention

However, the improvement of airtightness for an insert molded article has limitations when it relies solely on a processed insert member as described in JP 2014-133407. Consequently, a polyarylene sulfide resin composition capable of providing an insert molded article having excellent airtightness has been demanded to further increase the airtightness of an insert molded article.

The present invention is made in view of the above circumstances. An object of the present invention is to provide a polyarylene sulfide resin composition which enables manufacture of an insert molded article having excellent airtightness. Another object of the present invention is to provide an insert molded article manufactured with the above polyarylene sulfide resin composition.

Means for Solving the Problems

The present inventors found that the above objects can be achieved by using a polyarylene sulfide resin composition comprising an (A) polyarylene sulfide resin, a (B) powdery or granular filler, a (C) fibrous filler, and a (D) epoxy group-containing olefin based copolymer comprising a structural unit derived from a glycidyl ester of an $\alpha$, $\beta$-unsaturated acid, wherein the ratio of the mass of the structural unit derived from a glycidyl ester of an $\alpha$, $\beta$-unsaturated acid relative to the total mass of the composition; and the mean value of a shrinkage rate in the resin flow direction and

a shrinkage rate in the transverse direction to the resin flow, and a surface roughness Ra of a molded article injection-molded with a mold having a surface roughness Ra of 0.05 μm under specific conditions are adjusted within the corresponding predetermined ranges. Then the present invention has been completed. More specifically, the present invention can provide the followings.

(1) A polyarylene sulfide resin composition for insert molding comprising an (A) polyarylene sulfide resin, a (B) powdery or granular filler, a (C) fibrous filler, and a (D) epoxy group-containing olefin based copolymer,
wherein the (A) polyarylene sulfide resin comprises carboxyl terminal groups and is composed of a repeating unit of -(Ar-S)-, wherein "Ar" represents an arylene group, wherein the arylene group is at least one selected from the group consisting of a p-phenylene group, a m-phenylene group, an o-phenylene group, a p,p'-diphenylene sulfone group, a p,p'-biphenylene group, a p,p'-diphenylene ether group, a p,p'-diphenylene carbonyl group, and a naphthalene group, and wherein the arylene group "Ar" is not a substituted phenylene group,
a ratio X/Y of a mass X of the (B) powdery or granular filler to a mass Y of the (C) fibrous filler is more than 1.5 and 15.0 or less,
a number average fiber length of the (C) fibrous filler is 1 to 5 mm,
wherein the (D) epoxy group-containing olefin based copolymer comprises a structural unit derived from an α-olefin and a structural unit derived from a glycidyl ester of an α, β-unsaturated acid,
the ratio of the mass of the structural unit derived from a glycidyl ester of an α, β-unsaturated acid relative to the total mass of the polyarylene sulfide resin composition is 0.04 mass% or more, and
the polyarylene sulfide resin composition provides a molded article in which the mean value of a shrinkage rate in the resin flow direction and a shrinkage rate in the transverse direction to the resin flow is 0.60% or less, and a surface roughness as the arithmetic mean roughness Ra in accordance with JIS B 0601 is 0.13 μm or less when the molded article in the dimension of 80 mm × 80 mm × 2 mm is injection-molded with a mold having a surface roughness of 0.05 μm as the arithmetic mean roughness Ra in accordance with JIS B 0601 under conditions of a cylinder temperature of 320°C, a mold temperature of 150°C, and a holding pressure of 60 MPa.
(2) The polyarylene sulfide resin composition according to (1), providing a molded article in which the mean value of the shrinkage rate in the direction of the resin flow and the shrinkage rate in the transverse direction to the resin flow is 0.44% or less, and the surface roughness as the aforementioned arithmetic mean Ra is 0.12 μm or less when the molded article in the dimension of 80 mm × 80 mm × 2 mm is injection-molded with a mold having a surface roughness of 0.05 μm as the aforementioned arithmetic mean roughness Ra under conditions of a cylinder temperature of 320°C, a mold temperature of 150°C, and a holding pressure of 60 MPa.
(3) The polyarylene sulfide resin composition according to (1) or (2), wherein the mean particle size (50%d) of the (B) powdery or granular filler is 1 to 400 μm as measured by the laser diffraction/scattering method.
(4) The polyarylene sulfide resin composition according to any one of (1) to (3), wherein the (B) powdery or granular filler comprises glass beads or calcium carbonate.
(5) The polyarylene sulfide resin composition according to any one of (1) to (4), wherein the (C) fibrous filler comprises glass fiber.
(6) The polyarylene sulfide resin composition according to any one of (1) to (5), wherein the (D) epoxy group-containing olefin based copolymer comprises a structural unit derived from (meth)acrylic acid ester.
(7) The polyarylene sulfide resin composition according to any one of (1) to (6), further comprising one or more (E) silicon compounds selected from silicone oil and silicone rubber.
(8) An insert molded article integrally molded with an insert member by insert molding using the polyarylene sulfide resin composition according to any one of (1) to (7).
(9) The insert molded article according to (8), wherein the insert member is made of metal.
(10) The insert molded article according to (8) or (9), having a function for blocking a gas or a liquid. Further embodiments of the present invention are described in the appended claims.

Effects of the Invention

The present invention can provide a polyarylene sulfide resin composition enabling manufacture of an insert molded article having excellent airtightness, and an insert molded article manufactured with the above polyarylene sulfide resin composition.

BRIEF DESCRIPTION OF THE DRAWINGS

Fig. 1 shows the shape of an insert molded article used for evaluating airtightness. Fig. 2 is a schematic view of a cross section of an airtightness-testing machine in which an insert molded article has been mounted. Fig. 3 shows conditions for measuring a mold shrinkage rate in Examples. It is noted that the numerical values in the figure are

expressed in terms of mm. Fig. 4 shows conditions for measuring a surface roughness in Examples. It is noted that the numerical values in the figure are expressed in terms of mm.

PREFERRED MODE FOR CARRYING OUT THE INVENTION

Below, embodiments of the present invention will be described. It should be noted that the present invention shall not be limited to the following embodiments.

«Polyarylene sulfide resin composition»

The polyarylene sulfide resin composition comprises an (A) polyarylene sulfide resin, a (B) powdery or granular filler, a (C) fibrous filler, and a (D) epoxy group-containing olefin based copolymer. The (D) epoxy group-containing olefin based copolymer comprises a structural unit derived from an α-olefin and a structural unit derived from a glycidyl ester of an α, β-unsaturated acid. Further, the ratio of the mass of the structural unit derived from a glycidyl ester of an α, β-unsaturated acid relative to the total mass of the polyarylene sulfide resin composition is 0.04 mass% or more.

Further, the polyarylene sulfide resin composition can provide a molded article in which the mean value of a shrinkage rate in the resin flow direction and a shrinkage rate in the transverse direction to the resin flow is 0.60% or less, and a surface roughness as the arithmetic mean roughness Ra in accordance with JIS B 0601 is 0.13 μm or less when the molded article in the dimension of 80 mm × 80 mm × 2 mm is injection-molded with a mold having a surface roughness of 0.05 μm as the arithmetic mean roughness Ra in accordance with JIS B 0601 under conditions of a cylinder temperature of 320°C, a mold temperature of 150°C, and a holding pressure of 60 MPa.

When a molded article molded under specific conditions is used in which the mean value of a shrinkage rate in the resin flow direction and a shrinkage rate in the transverse direction to the resin flow is 0.60% or less, an insert molded article having a reduced shrinkage upon solidification of a resin member can be manufactured with the polyarylene sulfide resin composition. A minute void between an insert member and the resin member is unlikely to be formed when the shrinkage upon solidification of a resin member is small. This can likely provide an insert molded article having a high degree of airtightness. Here, with regard to the shrinkage rate, the reason why the mean value of a shrinkage rate in the resin flow direction and a shrinkage rate in the transverse direction to the resin flow (hereinafter, may also be referred to as the transverse flow direction) is that shrinkage occurring between an insert member and a resin member in an actual molded article, which may vary depending on the shape, is less likely to be affected solely by only one of the shrinkage rate in the direction of the resin flow or the shrinkage rate in the transverse flow direction, but is more likely to be affected by both of the shrinkage rates. This leads to the assumption that the both need to be considered together.

When a molded article molded under specific conditions has an arithmetic mean roughness Ra of 0.13 μm or less in accordance with JIS B 0601, the shape on the surface of a mold may be well transferred. A resin composition having good transferability to the surface of a mold can also allow a fine concavo-convex shape on the surface of an insert member to be well transferred to the surface of a resin member. That is, the resin composition can readily enter into fine depressed portions on the surface of the insert member without forming a fine cavity between the insert member and the resin member. This can readily provide an insert molded article having a high degree of airtightness.

The mean value of a shrinkage rate in the resin flow direction and a shrinkage rate in the transverse direction to the resin flow for a molded article molded under specific conditions is preferably 0.44% or less. Further, the arithmetic mean roughness Ra in accordance with JIS B 0601 of a molded article molded under specific conditions is preferably 0.12 μm or less.

There is no particular limitation for the method of adjusting the mean value of a shrinkage rate in the resin flow direction and a shrinkage rate in the transverse direction to the resin flow and the arithmetic mean roughness Ra for a molded article molded under specific conditions to desired values. Examples of the adjustment method include a method involving adjusting the ratio X/Y of the mass X of the (B) powdery or granular filler to the mass Y of the (C) fibrous filler to be contained in the polyarylene sulfide resin composition. A larger value of X/Y tends to increase the mean value of a shrinkage rate in the resin flow direction and a shrinkage rate in the transverse direction to the resin flow, and decrease the arithmetic mean roughness. Further, the arithmetic mean roughness Ra may also be adjusted by adjusting the mean particle size of the (B) powdery or granular filler. When the mean particle size of the (B) powdery or granular filler is too small, the melt viscosity of a polyarylene sulfide resin may be increased, resulting in an increased value of the arithmetic mean roughness Ra. In contrast, when the mean particle size of the (B) powdery or granular filler is moderately large, the value of the arithmetic mean roughness Ra may be lowered to within a desired range.

Below, essential or optional components to be included in the polyarylene sulfide resin composition and a method of manufacturing the polyarylene sulfide resin composition will be described.

[(A) Polyarylene sulfide resin]

The (A) polyarylene sulfide resin (PAS resin) is mainly composed of a repeating unit of -(Ar-S)- (wherein "Ar" represents an arylene group). PAS resins with commonly known molecular structures can be used in the present invention.
The arylene group is at least one selected from the group consisting of a p-phenylene group, an m-phenylene group, an o-phenylene group, a p,p'-diphenylene sulfone group, a p,p'-biphenylene group, a p,p'-diphenylene ether group, a p,p'-diphenylene carbonyl group, a naphthalene group, wherein the arylene group "Ar" is not a substituted phenylene group. Among arylene sulfide groups having these arylene groups, homopolymers including repeating units of the same type are preferred. In addition, polymers including repeating units of different arylene sulfide groups are preferred depending on use.
A homopolymer having a repeating unit of a p-phenylene sulfide group as an arylene group is preferred depending on use. A homopolymer having a repeating unit of a p-phenylene sulfide group has very high heat resistance, and shows high strength, high stiffness, and even high dimensional stability over a wide range of temperature. Use of such a homopolymer can provide a molded article having very good properties.
A copolymer can be used which includes a combination of two or more different arylene sulfide groups among those including the arylene groups exemplified above. Among these, inclusion of a combination of a p-phenylene sulfide group and an m-phenylene sulfide group is preferred in view of obtaining a molded article having physical properties such as high heat resistance, high moldability, and high mechanical properties. Further a polymer containing a p-phenylene sulfide group in a proportion of 70 mol% or more is more preferred, and a polymer containing a p-phenylene sulfide group in a proportion of 80 mol% or more is even more preferred. It is noted that a polyarylene sulfide resin having a phenylene sulfide group is referred to as a polyphenylene sulfide resin.
Polyarylene sulfide resins can be manufactured according to the conventionally known polymerization methods. A polyarylene sulfide resin manufactured by a common polymerization method is usually washed with water or acetone for several times, and then washed with acetic acid, ammonium chloride, and the like to remove by-product impurities and the like. Consequently, the resulting polyarylene sulfide resin has carboxyl terminal groups at the ends in a certain proportion.
The polyarylene sulfide resin used in the present invention has a weight average molecular weight (Mw) of 15000 or more and 40000 or less. A polyarylene sulfide resin having a weight average molecular weight of 40000 or less can provide a polyarylene sulfide resin composition showing high flowability in a molten state upon mold filling. This allows a molten resin to readily wrap around an insert member in a mold. Further, a polyarylene sulfide resin having a weight average molecular weight of 15000 or more will provide outstanding mechanical strength and moldability. Further, a more preferred range of the weight average molecular weight of a polyarylene sulfide resin is 20000 or more and 38000 or less. The above range can provide a resin composition having more excellently balanced mechanical properties and flowability.
It is noted that a weight average molecular weight may be measured by the high-temperature gel permeation chromatography method, and expressed as a weight average molecular weight in terms of standard polystyrene. The high-temperature gel permeation chromatography method can be performed, for example, using an instrument (UV detector: detection wavelength 360 nm) such as a SSC-7000 from Senshu Scientific Co., Ltd. A measurement sample which can be used for the measurement may be prepared by dissolving a polyarylene sulfide resin in a solvent of 1-chloronaphthalene under conditions of 230°C and 10 minutes to give a concentration of 0.05 mass %.
The (A) polyarylene sulfide resin preferably has a melt viscosity of 8 to 300 Pa·s, more preferably 10 to 200 Pa·s as measured at a shear rate of 1216/s and at 310°C in order to obtain better adhesion between an insert member and a resin member.
Further, a polyarylene sulfide resin composition containing silicone oil and/or silicone rubber tends to improve the flame resistance of the polyarylene sulfide resin composition. When a polyarylene sulfide resin composition contains silicone oil and/or silicone rubber, the above melt viscosity is preferably 90 Pa·s or more, more preferably 90 to 300 Pa·s, even more preferably 100 to 200 Pa·s, and in particular preferably 110 to 150 Pa·s.

[(B) Powdery or Granular filler]

The polyarylene sulfide resin composition contains the (B) powdery or granular filler. As used herein, the (B) powdery or granular filler refers to a filler having a mean value of the different-diameter ratio of 1 or more and 4 or less, and having an aspect ratio of 1 or more and less than 2. It is noted that this definition is related to the shape of the (B) powdery or granular filler before the (B) powdery or granular filler is blended in a polyarylene sulfide resin composition. Further, examples of the (B) powdery or granular filler also include spherical or approximately spherical fillers. There is no particular limitation for the (B) powdery or granular filler as long as it is traditionally used as a filler for resin products.
Specific examples of the (B) powdery or granular filler include carbon black, silica, quartz powder, glass beads, glass powder, calcium silicate, aluminum silicate, Kaolin, talc, clay, diatomite, silicates such wollastonite, metal oxides

such as iron oxide, titanium oxide, zinc oxide, and alumina, metal carbonates such as calcium carbonate and magnesium carbonate, calcium sulfate, metal sulfates such as barium sulfate, and others such as silicon carbide, silicon nitride, boron nitride, and various metal powders. These (B) powdery or granular fillers may be used in combination of two or more.

Among these, glass beads and a powder of calcium carbonate are preferred because they are inexpensive and readily available, and the mean value of a shrinkage rate in the resin flow direction and a shrinkage rate in the transverse direction to the resin flow and the arithmetic mean roughness Ra for a molded article molded under specific conditions can easily be adjusted to desired values.

There is no particular limitation for the mean particle size of the (B) powdery or granular filler as long as the effect of the present invention is not impaired. The mean particle size of the (B) powdery or granular filler is preferably 1 to 400 μm. A (B) powdery or granular filler having a particle diameter within the above range can provide a polyarylene sulfide resin composition with which an insert molded article having more excellent airtightness can be formed.

It is noted that the "mean particle size" as used in the present claims and description refers to a value measured by the laser diffraction/scattering method, and a particle diameter at the 50% integration value of the volume-based particle size distribution.

There is no particular limitation for the amount of the (B) powdery or granular filler to be used as long as it does not interfere with the objects of the present invention. The (B) powdery or granular filler is used along with the (C) fibrous filler described below so that the ratio X/Y of the mass X of the (B) powdery or granular filler to the mass Y of the (C) fibrous filler is more than 1.5 and 15.0 or less, and the proportion of the total amount of the mass X of the (B) powdery or granular filler and the mass Y of the (C) fibrous filler relative to the total mass of the polyarylene sulfide resin composition is preferably 3 to 60 mass% or less. Use of the (B) powdery or granular filler and the (C) fibrous filler in the above amounts can provide a polyarylene sulfide resin composition with which an insert molded article having excellent airtightness can be formed.

The ratio X/Y of the mass X of the (B) powdery or granular filler to the mass Y of the (C) fibrous filler is preferably more than 1.5 and 10.0 or less, in particular preferably more than 1.5 and less than 4.0. The proportion of the total amount of the mass X of the (B) powdery or granular filler and the mass Y of the (C) fibrous filler relative to the total mass of the polyarylene sulfide resin composition is more preferably 30 to 60 mass%.

[(C) Fibrous filler]

There is no particular limitation for the (C) fibrous filler as long as it is traditionally used as a filler or a toughening agent for various resin components. As used herein, the (C) fibrous filler refers to a filler having a mean value of the different-diameter ratio of 1 or more and 4 or less, and having an aspect ratio of 2 or more and 1500 or less. It is noted that this definition is related to the shape of the (C) fibrous filler before the (C) fibrous filler is blended in a polyarylene sulfide resin composition.

Specific examples of the (C) fibrous filler include glass fiber, asbestos fiber, carbon fiber, silica fiber, silica-alumina fiber, zirconia fiber, boron nitride fiber, boron fiber, potassium titanate fiber, and even inorganic fibrous materials such as fibrous materials of metal such as stainless steel, aluminum, titanium, copper, and brass. These (C) fibrous fillers may be used in combination of two or more.

Among these, glass fiber is preferred because it is inexpensive and easily available, and the mean value of a shrinkage rate in the resin flow direction and a shrinkage rate in the transverse direction to the resin flow and the arithmetic mean roughness Ra for a molded article molded under specific conditions can easily be adjusted to desired values.

A glass fiber having a circular or approximately circular cross-sectional shape is commonly used, but a glass fiber having a so-called modified cross-section may also be used. The shapes of the modified cross-section include, but not limited to, polygonal such as rectangular and rhomboidal, elliptical, cocoon-like, and the like.

The number average fiber length of the (C) fibrous filler before the (C) fibrous filler is blended in the polyarylene sulfide resin composition is 1 to 5 mm, preferably 1 to 3 mm. The number average diameter of the cross sections of the (C) fibrous filler is preferably 3 to 25 μm, more preferably 3 to 15 μm. It is noted that the longest distance between any two points on the outer periphery of a cross section of the fibrous filler is considered as the diameter of that cross section of the (C) fibrous filler.

As described above, the (C) fibrous filler is used along with the (B) powdery or granular filler so that the ratio X/Y of the mass X of the (B) powdery or granular filler to the mass Y of the (C) fibrous filler is 1.5 or more and 15.0 or less, and the proportion of the total amount of the mass X of the (B) powdery or granular filler and the mass Y of the (C) fibrous filler relative to the total mass of the polyarylene sulfide resin composition is preferably 3 to 60 mass% or less.

[(D) Epoxy group-containing olefin based copolymer]

The polyarylene sulfide resin composition contains the (D) epoxy group-containing olefin based copolymer. As the (D) epoxy group-containing olefin-based copolymer, an olefin based copolymer comprising a structural unit derived

from an α-olefin and may be used. The (D) epoxy group-containing olefin based copolymer may be used in combination of two or more.

A polyarylene sulfide resin composition having the (D) epoxy group-containing olefin based copolymer described above so that the content of a structural unit derived from a glycidyl ester of an α, β-unsaturated acid in the above composition falls within a predetermined range can provide good adhesion between the polyarylene sulfide resin composition and an insert member.

Further, the (D) epoxy group-containing olefin based copolymer may preferably comprises a structural unit derived from (meth)acrylic acid ester in addition to a structural unit derived from an α-olefin and a structural unit derived from a glycidyl ester of an α, β-unsaturated acid in view of readily obtaining a polyarylene sulfide resin composition having excellent moldability, mechanical properties, and adhesion with an insert member. It is noted that hereinafter, (meth)acrylic acid ester may also be referred to as (meth)acrylate. For example, (meth)acrylic acid glycidyl ester may also be referred to as glycidyl (meth)acrylate. Further, the term "(meth)acrylic acid" as used in the present description means both acrylic acid and methacrylic acid, and the term "(meth)acrylate" means both acrylate and methacrylate.

There is no particular limitation for an α-olefin. Examples of an α-olefin include ethylene, propylene, butylene, and the like. In particular, ethylene is preferred. An α-olefin may be used alone, or in combination of two or more. A (D) epoxy group-containing olefin based copolymer having a structural unit derived from an α-olefin tends to confer flexibility on a molded article formed with the polyarylene sulfide resin composition. A flexible molded article tends to enhance the joining strength between an insert member, in particular a metal insert member and a resin member in manufacturing an insert molded article.

There is no particular limitation for the glycidyl ester of an α, β-unsaturated acid. Examples include glycidyl acrylate ester, glycidyl methacrylate ester, glycidyl ethacrylate ester, and the like. In particular, glycidyl methacrylate ester is preferred. Glycidyl esters of α, β-unsaturated acids may be used alone or in combination of two or more. A (D) epoxy group-containing olefin based copolymer containing a glycidyl ester of an α, β-unsaturated acid tends to enhance the joining strength between an insert member and a resin member in manufacturing an insert molded article.

There is no particular limitation for (meth)acrylic acid ester. Examples of (meth)acrylic acid ester include acrylic acid ester such as methyl acrylate, ethyl acrylate, acrylic acid-n-propyl, isopropyl acrylate, acrylic acid-n-butyl, acrylic acid-n-hexyl, and acrylic acid-n-octyl; methacrylic acid ester such as methyl methacrylate, ethyl methacrylate, methacrylic acid-n-propyl, isopropyl methacrylate, methacrylic acid-n-butyl, isobutyl methacrylate, methacrylic acid-n-amyl, and methacrylic acid-n-octyl. Among these, methyl acrylate is particularly preferred. (Meth)acrylic acid ester may be used alone, or in combination of two or more. A (D) epoxy group-containing olefin based copolymer comprising a structural unit derived from (meth)acrylic acid ester tends to enhance the joining strength between an insert member and a resin member when manufacturing an insert molded article.

The (D) epoxy group-containing olefin based copolymer comprising a structural unit derived from an α-olefin and a structural unit derived from a glycidyl ester of an α, β-unsaturated-acid, and the (D) epoxy group-containing olefin based copolymer further comprising a structural unit derived from (meth)acrylic acid ester can be manufactured by performing copolymerization according to the conventionally known method. For example, the above copolymers can be usually obtained by performing copolymerization via the well-known radical polymerization reaction. There is no particular limitation for the type of a copolymer, but it may be a random copolymer or block copolymer. Further, it may be olefin-based graft copolymer in which for example, methyl polymethacrylate, ethyl polymethacrylate, methyl polyacrylate, ethyl polyacrylate, butyl polyacrylate, polyacrylic acid-2 ethylhexyl, polystyrene, polyacrylonitrile, acrylonitrile-styrene copolymer, butyl acrylate-styrene copolymer, or the like is attached to the olefin-based copolymer via a chemical bond to form a branched or cross-linking structure.

The olefin based copolymer used in the present invention may comprise a structural unit derived from other copolymer components as long as the effect of the present invention is not impaired.

More specifically, examples of the (D) epoxy group-containing olefin based copolymer include glycidyl methacrylate-modified ethylene based copolymer, glycidyl ether-modified ethylene copolymer, and the like. Among these, glycidyl methacrylate-modified ethylene based copolymer is preferred.

Examples of glycidyl methacrylate-modified ethylene based copolymer include glycidyl methacrylate graft-modified ethylene polymer, ethylene-glycidyl methacrylate copolymer, and ethylene-glycidyl methacrylate-methyl acrylate copolymer. Among these, ethylene-glycidyl methacrylate copolymer and ethylene-glycidyl methacrylate-methyl acrylate copolymer are preferred in view of obtaining a particularly excellent metal-resin composite molded body. Ethylene-glycidyl methacrylate-methyl acrylate copolymer is particularly preferred. Specific examples of ethylene-glycidyl methacrylate copolymer and ethylene-glycidyl methacrylate-methyl acrylate copolymer include "BONDFAST " (Sumitomo Chemical Co., Ltd.) and the like.

Examples of glycidyl ether-modified ethylene copolymer can include glycidyl ether graft-modified ethylene copolymer, glycidyl ether-ethylene copolymer, and the like.

There is no particular limitation for the content of the (D) epoxy group-containing olefin based copolymer as long as the ratio of the mass of a structural unit derived from a glycidyl ester of an α, β-unsaturated acid to the total mass

of the polyarylene sulfide resin composition is 0.04 mass% or more.

When the ratio of the mass of a structural unit derived from a glycidyl ester of an α, β-unsaturated acid relative to the total mass of the polyarylene sulfide resin composition is 0.04 mass% or more, a good affinity between an insert member and a resin member can be obtained in an insert molded article.

The ratio of the mass of a structural unit derived from a glycidyl ester of an α, β-unsaturated acid relative to the total mass of the polyarylene sulfide resin composition is preferably 0.06 to 1.0 mass%, more preferably 0.09 to 0.50 mass%. It is more preferably 0.10 mass% or less when the (E) silicon compound described below is used together to obtain flame resistance.

When the above ratio of the mass of a structural unit derived from a glycidyl ester of an α, β-unsaturated acid relative to the total composition is less than 0.04 mass%, the joining strength between an insert member and a resin member tends to be decreased in manufacture of an insert molded article with the polyarylene sulfide resin composition. Further, the adhesion between an insert metal material and a resin member may be affected by the linear differential expansion between these materials. Stress relaxation obtained by virtue of the (D) epoxy group-containing olefin based copolymer appears to decrease strain, improving the aforementioned joining strength. Stress relaxation may be affected by toughness which can be evaluated by tensile elongation. When the content of the (D) epoxy group-containing olefin based copolymer serving as an elastomer is small, tensile elongation appears to be low, resulting in an insufficient stress relaxation effect.

There is no particular limitation for the upper limit of the ratio of the mass of a structural unit derived from a glycidyl ester of an α, β-unsaturated acid relative to the total mass of the composition as long as it does not interfere with the objects of the present invention. When the amount of the structural unit derived from a glycidyl ester of an α, β-unsaturated acid in the composition is too large, more frequent maintenance of a mold may be required due to impaired releasability or increased gas development upon insert molding.

[(E) Silicon compound]

The polyarylene sulfide resin composition may comprise one or more (E) silicon compounds selected from silicone rubber and silicone oil. The (E) silicon compound may serve as a flame retardant. That is, when a resin composition used in the present invention contains a specific (E) silicon compound, a resin member obtained from that resin composition tends to have excellent flame resistance even if it is thin. Silicone rubber and silicone oil serving as the (E) silicon compound may be used alone or in combination of two or more.

The (E) silicon compound may be selected from silicone rubber and silicone oil, but silicone rubber is preferred.

Silicone rubber

There is no particular limitation for silicone rubber as long as it includes a cross-linked material having a structure in which a linear polymer having a unit represented by $R^A{}_2SiO_{2/2}$ (wherein $R^A$ represents an organic group) is cross-linked, and has rubber elasticity. There is also no particular limitation for the organic group attached to a silicon atom and the molecular structure and the like of the above cross-linked material.

There is no particular limitation for the properties of silicone rubber, but for example, fine particles of silicone rubber may be added to a resin composition used in the present invention. There is no particular limitation for the shape of the fine particles of silicone rubber, but, for example, it may be spherical. The mean particle size of the fine particles of silicone rubber is preferably 1 to 40 μm, preferably 2 to 20 μm. It is noted that a value of the mean particle size in the present description is determined with an image measurement machine according to an image processing approach after a stereoscopic microscope image is captured with a CCD camera and transferred to a PC.

Silicone oil

There is no particular limitation for silicone oil, but examples of silicone oil include those represented by the following general formula.

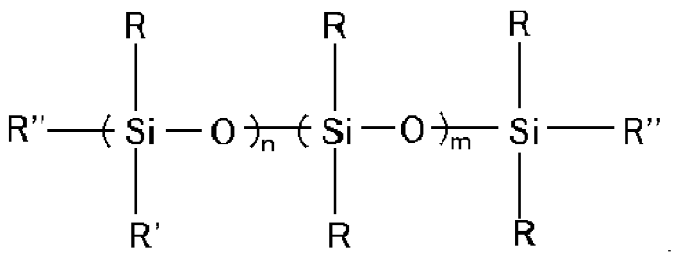

(In the formula, R is the same or a different alkyl group having 1 to 3 carbon atoms, R' is the same or a different substituted or unsubstituted alkyl or phenyl group, R" represents an alkyl or alkoxy group having 1 to 3 carbon atoms, and n and m are independently an integer of 0 to 10000 provided that they are not simultaneously 0.)

Examples of the alkyl group represented by R in the above general formula include a methyl group, an ethyl group, an n-propyl group, an isopropyl group, and the like.

The alkyl group represented by R' in the above general formula is of the same type as defined for the alkyl group represented by R. Examples of the substituted alkyl group include halogenated alkyl groups such as a 3,3,3-trifluoropropyl group substituted with a halogen atom. Further, examples of the substituted phenyl group include a chlorophenyl group substituted with a halogen atom and the like.

The alkyl group represented by R" in the above general formula is of the same type as defined for the alkyl group represented by R. Examples of the alkoxy group include, for example, a methoxy group, an ethoxy group, an n-propoxy group, an isopropoxy group, and the like.

n is preferably an integer of 0 to 5000, and m is preferably an integer of 0 to 5000, and in particular, both n and m preferably fall within these preferred ranges at the same time.

Specific examples of silicone oil represented by the above general formula include dimethyl silicone oil; methylphenyl silicone oil; an alkyl-modified silicone oil in which some of methyl groups and phenyl groups thereof are substituted with ethyl groups, propyl groups, and the like; and the like. Among these, dimethyl silicone oil is preferred.

The content of the (E) silicon compound is generally 0.3 to 5 parts by mass relative to 100 parts by mass of the (A) polyarylene sulfide resin, preferably 0.4 to 4 parts by mass. When the content is less than 0.3 parts by mass, flame resistance of a thin resin member may be decreased. When the content is more than 5 parts by mass, the joining strength between an insert member and a resin member may be decreased.

[Other components]

In addition to the components described above, the polyarylene sulfide resin composition may comprise an additive such as an organic filler, a flame retardant other than the (E) silicon compound, an ultraviolet absorber, a thermostabilizer, a light stabilizer, a colorant, carbon black, a parting agent, and a plasticizing agent in order to obtain desired physical properties as long as the effect of the present invention is not impaired.

[Method of manufacturing polyarylene sulfide resin composition]

There is no particular limitation for the method of manufacturing a polyarylene sulfide resin composition as long as components of the resin composition can be uniformly mixed, but it can be appropriately selected from the known methods of manufacturing a resin composition. Examples include a method in which components are melt-kneaded and extruded with a melt kneading machine such as a uniaxial or biaxial extruder, and then the resulting resin composition is processed into a desired form such as powder, flake, and pellet.

«Insert molded article»

The insert molded article according to the present invention is integrally molded with an insert member by insert molding using the aforementioned polyarylene sulfide resin composition. It is similar to a common insert molded article except that the aforementioned polyarylene sulfide resin composition is used as a material.

As used herein, the term "common insert molded article" refers to a composite molded article which can be obtained by pre-arranging a metal and the like in a molding mold, and filling the outside thereof with a resin composition. Methods of filling a mold with a resin composition to perform molding include the injection molding method, the extrusion compression molding method, and the like. Injection molding method is commonly used. In particular, the injection molding method requires an outstanding flowability as in the resin composition according to the present invention.

Further, there is no particular limitation for the insert member, but those which will not be deformed or melted

upon making contact with a resin during molding are preferably used. This is because they are used to take advantage of their properties and compensate disadvantages of the resin. For example, those pre-molded into a form of a rod, a pin, a screw, or the like are used which are mainly made of a metal such as aluminum, magnesium, copper, iron, brass, and alloys thereof, or an inorganic solid such as glass and ceramics. In the present invention, the effect of the present invention can be obtained significantly when a metal is used as the insert member. It is noted that there is no particular limitation for the shape and the like of the insert member.

The insert member may be subjected to surface roughening treatment by a physical method such as sandblasting and laser irradiation. The insert member may also be chemically treated. Chemical treatment can provide chemical adhesive effects due to covalent bonding, hydrogen bonding, intermolecular force, or the like between an insert metal member and a resin member to be insert-molded. This tends to improve airtightness at the interface between the insert member and the resin member. Examples of chemical treatment include triazine treatment (see Japanese Unexamined Patent Application, Publication No. 2000-218935), chemical etching (Japanese Unexamined Patent Application, Publication No. 2001-225352), dry treatment such as corona discharge, and the like. Further, examples also include warm-water treatment (Japanese Unexamined Patent Application, Publication No. H-142110) when the material of an insert member is aluminum. Examples of warm-water treatment include immersion in water at 100°C for 3 to 5 minutes. Multiple chemical treatments may be performed in combination.

The polyarylene sulfide resin composition according to the present invention as described above can provide an insert molded article having excellent airtightness. The insert molded article manufactured with the polyarylene sulfide resin composition according to the present invention may be used for various uses. In particular it may be suitably used for cases where a high degree of airtightness is required.

For example, the insert molded article manufactured with the polyarylene sulfide resin composition according to the present invention is suitable as those including an electric/electronic part and the like susceptible to humidity and moisture in the inside thereof. In particular, it can be suitably used as a part of electric/electronic devices in which intrusion of moisture and humidity may lead to failure, the devices being assumed to be used in the fields where a high level of waterproof is required, for example, in a river, pool, ski slope, bath, and the like. The insert molded article manufactured with the polyarylene sulfide resin composition according to the present invention is also useful, for example, as a sensor such as an inclination sensor and a fuel sensor. With regard to the inclination sensor, those used for in-vehicle applications such as attitude control, and those used for game controllers can be exemplified. With regard to the fuel sensor, those used for in-vehicle applications such as fuel quantity measurement may be exemplified. Further, the insert molded article manufactured with the polyarylene sulfide resin composition according to the present invention is also useful as a housing for an electric/electronic device including a resin boss, attachment member, and the like in the inside thereof. Here, examples of the housing for an electric/electronic device include those for portable video-electronic devices such as cameras, camcorders, and digital cameras in addition to cellular phones; those for portable information or communication terminals such as laptop computers, pocket computers, calculators, electronic organizers, PDCs, PHSs, and cellular phones; those for portable sound-electronic devices such as MDs, cassette headphone stereo systems, and radios; those for consumer electronics such as liquid crystal TVs/monitors, phones, facsimiles, and hand scanners; and the like.

## EXAMPLES

Below, the present invention will be specifically described with reference to Examples and Comparative Examples, but the present invention shall not be limited to these Examples.

Examples 1-13 and Comparative Examples 1-8]

In Examples and Comparative Examples, the following materials were used as materials for a polyarylene sulfide resin composition.

<Component (A): polyarylene sulfide resin>

FORTRON KPS W203A (Kureha Corporation, melt viscosity: 30 Pa·s (Shear rate: 1216 $sec^{-1}$ at 310°C))

<Component (B): powdery or granular filler>

B1: glass beads, EGB731A (Potters-Ballotini Co., Ltd., Mean particle size: 20 μm)
B2: calcium carbonate powder, WHITON P-30 (Toyo Fine Chemical Co., Ltd., Mean particle size: 5 μm)

<Component (C): fibrous filler>

Chopped strands of glass fiber ECS03T747 (Nippon Electric Glass Co., Ltd., Mean fiber diameter: 13 μm)

<Component (D): epoxy group-containing olefin based copolymer>

BONDFAST 7L (Sumitomo Chemical Co., Ltd., ethylene-glycidyl methacrylate-methyl acrylate copolymer, the content of glycidyl methacrylate unit: 3 mass%)

<Component (E): silicon compound (silicone elastomer)>

Silicone elastomer (Dow Corning Toray Co., Ltd., DY33-315 (silicone rubber particles, Mean particle size: 10 μm or less)

The components (A), (B), (C), (D), and (E) were melt-kneaded at a cylinder temperature of 320°C with a biaxial extruder to make pellets of the resin compositions of Examples and Comparative Examples. The species and amounts of the above components are shown in Tables 1 and 2. It is noted that the components (B) and (C) were introduced into the extruder through a side feeder.

The resulting polyarylene sulfide resin compositions were used to obtain plate-like molded articles according to the following method.

<Method of manufacturing plate-like molded article>

Injection molding was performed under the following conditions: a cylinder temperature of 320°C, a mold temperature of 150°C, a holding pressure of 60 MPa, a pressure holding time of 15 seconds, a cooling time of 10 seconds, an injection speed of 34 mm/second, and a holding pressure speed of 34 mm/second to obtain a plate-like resin molded article in the dimension of 80 mm in length, 80 mm in width, and 2 mm in thickness (side gate, gate size: 2 mmW × 1 mmt).

Five of the resulting molded articles were measured for shrinkage rates with a three-dimensional measurement instrument (Mitutoyo Corporation, a three-dimensional dimension measurement instrument Crysta-Apec C574). The mold shrinkage rates were measured at a region shown in Fig. 3 along the flow direction a and the transverse flow direction b. The mean value of the shrinkage rates in the flow direction and the transverse flow direction was computed for each molded article. The mean value of the measurement results for the 5 molded articles was taken as the mean value of a shrinkage rate in the resin flow direction and a shrinkage rate in the transverse direction to the resin flow for each polyarylene sulfide resin composition. The calculated values are shown in Tables 1 and 2.

Further, three of the resulting molded articles were used to calculate the arithmetic mean roughness Ra of the plate-like molded articles. The 3 molded articles were measured for the surface roughness in a 15-mm region at the center of a plate-like molded article in the transverse flow direction as shown in Fig. 4 using a surface roughness measurement instrument (Mitutoyo Corporation, a contour measurement instrument Surftest SV-3000CNC). The measurement results from each molded article were used to calculate the arithmetic mean roughness Ra in accordance with JIS B 0601. The mean value of the arithmetic mean roughnesses Ra of the 3 molded articles was taken as the arithmetic mean roughness Ra of each polyarylene sulfide resin composition. The calculated values are shown in Tables 1 and 2.

Further, the polyarylene sulfide resin compositions obtained were used to manufacture an insert molded article as shown in Fig. 1, and the resulting insert molded article was used to evaluate the airtightness of the insert molded article in accordance with the method described below.

A rod-like copper member with the dimension of 35 mm in length, 3.5 mm in width, and 1.3 mm in thickness was used as an insert member. It is noted that an insert member was used which was subjected to chemical treatment so that a treatment width in the longitudinal direction of the insert member was 3 mm, 4 mm, or 5 mm centered at a position of the insert member corresponding to the central portion in the thickness direction of the insert member having a shape as shown in Fig. 1 (a position at a distance of 5.5 mm from the upper or lower surface).

Chemical etching was performed on an insert member as chemical treatment according to the following method. Specifically, the surface of a copper insert metal member was immersed in an etching solution A (aqueous solution) having the following composition for 1 minute to remove an anticorrosive film, and then immersed in an etching solution B (aqueous solution) having the following composition for 5 minutes to etch the surface of the metal part.

- Etching solution A (temperature: 20°C)

  Hydrogen peroxide 26 g/L
  Sulfuric acid 90 g/L

- Etching solution B (temperature: 25°C)

  Hydrogen peroxide 80 g/L
  Sulfuric acid 90 g/L
  Benzotriazol 5 g/L
  Sodium chloride 0.2 g/L

Insert members were each arranged in a mold, and insert molding was performed with the polyarylene sulfide resin composition from each of Examples and Comparative Examples to manufacture an insert molded article in which the insert members were integrated with the resin member. Molding conditions are as follows.

[Molding conditions]

Molding machine: FANUC $\alpha$-50c
Cylinder temperature: 310°C-320°C-320°C-300°C
Mold temperature: 150°C
Injection speed: 17 mm/s
Holding pressure: 70 MPa × 20 seconds

<Method of evaluating airtightness>

An insert molded article 2 produced according to the above method was evaluated for airtightness in accordance with the following method. An airtightness-testing machine 1 includes an airtightness-testing machine body 3 and an airtightness-testing machine lid 4. The insert molded article 2 was attached to the airtightness-testing machine body 3 through an O-ring 10, and the lower surface of the insert molded article 2 in Fig. 2 was sealed. Then, the airtightness-testing machine lid 4 was placed on the insert molded article 2, and clamped. Distilled water 11 was poured over the insert molded article 2 so that the portion of the resin member of the insert molded article 2 was completely immersed under the distilled water 11. A pressure of 500 MPa was applied to an inside 13 of the airtightness-testing machine body for 1 minute through a line 12, and whether or not there was an air bubble leaked from the interface of the insert member and the resin member was visually checked. Results from the evaluation of airtightness performed in accordance with the following evaluation criteria are shown in Tables 1 and 2.

Good: the above test was performed for 3 times, and no leaked air bubble was observed in all of the tests.
Poor: the above test was performed for 3 times, and leaked air bubbles were observed in one or more of the tests.

Further, the polyarylene sulfide resin compositions from Examples 10 and 11 were evaluated for flame resistance in accordance with the following method. Evaluation results are shown in Table 1.

<Method of evaluating flame resistance>

A polyarylene sulfide resin composition was subjected to injection molding at a molding temperature of 250°C and a mold temperature of 80°C for manufacture. A sample piece with a thickness of 0.8 mm or 1.6 mm was evaluated for flame resistance in accordance with the UL-94 standard vertical combustion test of Underwriters Laboratories.
The ratios 1 to 3 in Tables 1 and 2 below refer to the followings.

Ratio 1: Mass of component (B) / mass of component (C)

Ratio 2 (mass%): (mass of component (B) + mass of component (C)) / mass of total composition × 100

Ratio 3 (mass %): mass of unit derived from glycidyl methacrylate in component (D) / mass of the total composition × 100.

Example 1 in Table 1 below is a reference example.

[Table 1]

| | | Examples | | | | | | | | | | | | |
|---|---|---|---|---|---|---|---|---|---|---|---|---|---|---|
| | | 1 | 2 | 3 | 4 | 5 | 6 | 7 | 8 | 9 | 10 | 11 | 12 | 13 |
| Components | | | | | | | | | | | | | | |
| (A) (parts by mass) | | 100 | 100 | 100 | 100 | 100 | 100 | 100 | 100 | 100 | 100 | 100 | 100 | 100 |
| (B) (type / parts by mass) | | B1/57 | B1/68 | B1/74 | B1/80 | B1/86 | B1/91 | B1/103 | B1/80 | B1/80 | B1/80 | B1/75 | B2/80 | B2/80 |
| (C) (parts by mass) | | 57 | 46 | 40 | 34 | 29 | 23 | 11 | 34 | 34 | 34 | 32 | 34 | 34 |
| (D) (parts by mass) | | 13.7 | 13.7 | 13.7 | 13.7 | 13.7 | 13.7 | 13.7 | 4.6 | 6.8 | 14 | 6 | 13.7 | 6.8 |
| (E) (parts by mass) | | - | - | - | - | - | - | - | - | - | 0.7 | 0.6 | - | - |
| Ratio 1 | | 1.0 | 1.5 | 1.9 | 2.3 | 3.0 | 4.0 | 9.0 | 2.3 | 2.3 | 2.3 | 2.3 | 2.3 | 2.3 |
| Ratio 2 (mass %) | | 50 | 50 | 50 | 50 | 50 | 50 | 50 | 50 | 50 | 50 | 50 | 50 | 50 |
| Ratio 3 (mass %) | | 0.18 | 0.18 | 0.18 | 0.18 | 0.18 | 0.18 | 0.18 | 0.06 | 0.09 | 0.18 | 0.09 | 0.18 | 0.09 |
| Properties of plate-like molded articles | | | | | | | | | | | | | | |
| Mean value of shrinkage rates | | 0.34 | 0.36 | 0.38 | 0.40 | 0.41 | 0.46 | 0.54 | 0.41 | 0.42 | 0.41 | 0.41 | 0.42 | 0.42 |
| Ra | | 0.13 | 0.13 | 0.12 | 0.12 | 0.11 | 0.09 | 0.08 | 0.12 | 0.12 | 0.12 | 0.13 | 0.13 | 0.13 |
| Evaluation of airtightness | | | | | | | | | | | | | | |
| Treatment width | 3mm | Poor | Poor | Good | Good | Good | Poor | Poor | Good | Good | Good | Good | Poor | Poor |
| | 4mm | Good | Good | Good | Good | Good | Good | Good | Good | Good | Good | Good | Good | Good |
| | 5mm | Good | Good | Good | Good | Good | Good | Good | Good | Good | Good | Good | Good | Good |
| Flame resistance: 0.8mm | | | | | | | | | | | | | | |
| Evaluation | | - | - | - | - | - | - | - | - | - | HB or worse | V-0 | - | - |

(continued)

| Flame resistance: 1. 6mm | | | | | | | | | | | | | |
|---|---|---|---|---|---|---|---|---|---|---|---|---|---|
| Evaluation | - | - | - | - | - | - | - | - | - | V-0 | V-0 | - | - |

[Table 2]

| | | Comparative examples | | | | | | | |
|---|---|---|---|---|---|---|---|---|---|
| | | 1 | 2 | 3 | 4 | 5 | 6 | 7 | 8 |
| Composition | | | | | | | | | |
| (A)<br>(parts by mass) | | 100 | 100 | 100 | 100 | 100 | 100 | 100 | 100 |
| (B)<br>(type / parts by mass) | | -/0 | B1/11 | B1/23 | B1/34 | B1/46 | B1/108 | B1/114 | B2/45 |
| (C)<br>(parts by mass) | | 114 | 103 | 91 | 80 | 68 | 6 | 0 | 67 |
| (D)<br>(parts by mass) | | 13.7 | 13.7 | 13.7 | 13.7 | 13.7 | 13.7 | 13.7 | 11.2 |
| Ratio 1 | | 0.0 | 0.1 | 0.3 | 0.4 | 0.7 | 19.0 | - | 0.7 |
| Ratio 2<br>(mass %) | | 50 | 50 | 50 | 50 | 50 | 50 | 50 | 50 |
| Ratio 3<br>(mass %) | | 0.18 | 0.18 | 0.18 | 0.18 | 0.18 | 0.18 | 0.18 | 0.15 |
| Properties of plate-like molded articles | | | | | | | | | |
| Mean value of shrinkage rates | | 0.32 | 0.32 | 0.31 | 0.32 | 0.33 | 0.62 | 0.76 | 0.34 |
| Ra | | 0.26 | 0.22 | 0.19 | 0.18 | 0.14 | 0.07 | 0.06 | 0.14 |
| Evaluation of airtightness | | | | | | | | | |
| Treatment width | 3nm | Poor | Poor | Poor | Poor | Poor | Poor | Poor | Poor |
| | 4mm | Poor | Poor | Poor | Poor | Poor | Poor | Poor | Poor |
| | 5mm | Poor | Good | Good | Good | Good | Good | Poor | Good |

As understood from Table 1, the insert molded articles formed with the polyarylene sulfide resin compositions from Examples 2 to 13 show good airtightness even when the width of the chemically treatment region of the insert member is small. The polyarylene sulfide resin compositions from Examples 2 to 13 each comprise an (A) polyarylene sulfide resin, a (B) powdery or granular filler, a (C) fibrous filler, and a (D) epoxy group-containing olefin based copolymer comprising a structural unit derived from a glycidyl ester of an $\alpha$, $\beta$-unsaturated acid, wherein the ratio of the mass of the structural unit derived from a glycidyl ester of an $\alpha$, $\beta$-unsaturated acid relative to the total mass of the polyarylene sulfide resin composition; and the mean value of a shrinkage rate in the resin flow direction and a shrinkage rate in the transverse direction to the resin flow and the arithmetic mean roughness Ra of the plate-like molded article satisfy the corresponding specific ranges.

In contrast, as understood from Table 2, the insert molded articles formed with the polyarylene sulfide resin compositions from Comparative Examples 1 to 8 show inferior airtightness when the width of the chemically treatment region of the insert member is small. The polyarylene sulfide resin compositions from Comparative Examples 1 to 8 each comprise an (A) polyarylene sulfide resin, at least one of a (B) powdery or granular filler and a (C) fibrous filler, and a (D) epoxy group-containing olefin based copolymer comprising a structural unit derived from a glycidyl ester of an $\alpha$, $\beta$-unsaturated acid, in which at least one of the mean value of a shrinkage rate in the resin flow direction and a shrinkage rate in the transverse direction to the resin flow and the arithmetic mean roughness Ra of the plate-like molded article does not fall within the corresponding specific ranges.

EXPLANATION OF REFERENCE NUMERALS

1 Airtightness-testing machine

2 Insert molded article
3 Airtightness-testing machine body
4 Airtightness-testing machine lid
10 O-ring
11 Distilled water
12 Line

## Claims

**1.** A polyarylene sulfide resin composition for insert molding comprising an (A) polyarylene sulfide resin, a (B) powdery or granular filler, a (C) fibrous filler, and a (D) epoxy group-containing olefin based copolymer,
wherein the (A) polyarylene sulfide resin comprising carboxyl terminal groups and being composed of a repeating unit of -(Ar-S)-, wherein "Ar" represents an arylene group, wherein the arylene group is at least one selected from the group consisting of a p-phenylene group, a m-phenylene group, an o-phenylene group, a p,p'-diphenylene sulfone group, a p,p'-biphenylene group, a p,p'-diphenylene ether group, a p,p'-diphenylene carbonyl group, and a naphthalene group, and wherein the arylene group "Ar" is not a substituted phenylene group,
a ratio X/Y of a mass X of the (B) powdery or granular filler to a mass Y of the (C) fibrous filler is more than 1.5 and 15.0 or less, a number average fiber length of the (C) fibrous filler is 1 to 5 mm,
the (D) epoxy group-containing olefin based copolymer comprises a structural unit derived from an α-olefin and a structural unit derived from a glycidyl ester of an α, β-unsaturated acid,
the ratio of the mass of the structural unit derived from a glycidyl ester of an α, β-unsaturated acid relative to the total mass of the polyarylene sulfide resin composition is 0.04 mass% or more, and
the polyarylene sulfide resin composition provides a molded article in which the mean value of a shrinkage rate in the resin flow direction and a shrinkage rate in the transverse direction to the resin flow is 0.60% or less, and a surface roughness as the arithmetic mean roughness Ra in accordance with JIS B 0601 is 0.13 μm or less when the molded article in the dimension of 80 mm × 80 mm × 2 mm is injection-molded with a mold having a surface roughness of 0.05 μm as the arithmetic mean roughness Ra in accordance with JIS B 0601 under conditions of a cylinder temperature of 320°C, a mold temperature of 150°C, and a holding pressure of 60 MPa.

**2.** The polyarylene sulfide resin composition for insert molding according to claim 1, providing a molded article in which the mean value of the shrinkage rate in the direction of the resin flow and the shrinkage rate in the transverse direction to the resin flow is 0.44% or less, and the surface roughness as the arithmetic mean Ra is 0.12 μm or less when the molded article in the dimension of 80 mm × 80 mm × 2 mm is injection-molded with a mold having a surface roughness of 0.05 μm as the arithmetic mean roughness Ra under conditions of a cylinder temperature of 320°C, a mold temperature of 150°C, and a holding pressure of 60 MPa.

**3.** The polyarylene sulfide resin composition for insert molding according to claim 1 or 2, wherein the mean particle size (50%d) of the (B) powdery or granular filler is 1 to 400 μm as measured by the laser diffraction/scattering method.

**4.** The polyarylene sulfide resin composition for insert molding according to any one of claims 1 to 3, wherein the (B) powdery of granular filler comprises glass beads or calcium carbonate.

**5.** The polyarylene sulfide resin composition for insert molding according to any one of claims 1 to 4, wherein (C) the fibrous filler comprises glass fiber.

**6.** The polyarylene sulfide resin composition for insert molding according to any one of claims 1 to 5, wherein the (D) epoxy group-containing olefin based copolymer comprises a structural unit derived from (meth)acrylic acid ester.

**7.** The polyarylene sulfide resin composition for insert molding according to any one of claims 1 to 6, further comprising one or more (E) silicon compounds selected from silicone oil and silicone rubber.

**8.** The polyarylene sulfide resin composition for insert molding according to any one of claims 1 to 7, wherein the (D) epoxy group-containing olefin based copolymer is one or more selected from glycidyl methacrylate graft-modified ethylene polymer, ethylene-glycidyl methacrylate copolymer, and ethylene-glycidyl methacrylate-methyl acrylate copolymer.

**9.** The polyarylene sulfide resin composition for insert molding according to any one of claims 1 to 8, wherein the insert

molding is performed with an insert member made of metal, glass, or ceramics.

**10.** An insert molded article integrally molded with an insert member by insert molding using the polyarylene sulfide resin composition according to any one of claims 1 to 8.

**11.** The insert molded article according to claim 10, wherein the insert member is made of metal, glass, or ceramics.

**12.** The insert molded article according to claim 10 or 11, having a function for blocking a gas or a liquid.

**Patentansprüche**

**1.** Polyarylensulfid-Harzzusammensetzung für das Einsatzformen, umfassend ein (A) Polyarylensulfid-Harz, einen (B) pulverförmigen oder granulären Füllstoff, einen (C) faserförmigen Füllstoff und ein (D) Epoxy-Gruppen enthaltendes Copolymer auf Olefinbasis,
wobei das (A) Polyarylensulfid-Harz Carboxyl-Endgruppen umfasst und aus einer wiederkehrenden Einheit von -(Ar-S)- zusammengesetzt ist, wobei "Ar" eine Arylen-Gruppe darstellt, wobei die Arylen-Gruppe mindestens eine ist, die aus der Gruppe ausgewählt ist, die aus einer p-Phenylen-Gruppe, einer m-Phenylen-Gruppe, einer o-Phenylen-Gruppe, einer p,p'-Diphenylensulfon-Gruppe, einer p,p'-Biphenylen-Gruppe, einer p,p'-Diphenylenether-Gruppe, einer p,p'-Diphenylencarbonyl-Gruppe und einer Naphthalin-Gruppe besteht, und wobei die Arylen-Gruppe "Ar" keine substituierte Phenylen-Gruppe ist,
ein Verhältnis X/Y einer Masse X des (B) pulverförmigen oder granulären Füllstoffs zu einer Masse Y des (C) faserförmigen Füllstoffs mehr als 1,5 und 15,0 oder weniger beträgt,
eine zahlenmittlere Faserlänge des (C) faserförmigen Füllstoffs 1 bis 5 mm beträgt,
das (D) Epoxy-Gruppen enthaltende Copolymer auf Olefinbasis eine Struktureinheit, die von einem $\alpha$-Olefin abgeleitet ist, und eine Struktureinheit, die von einem Glycidylester einer $\alpha$, $\beta$-ungesättigten Säure abgeleitet ist, umfasst,
das Verhältnis der Masse der Struktureinheit, die von einem Glycidylester einer $\alpha$, $\beta$-ungesättigten Säure abgeleitet ist, zur Gesamtmasse der Polyarylensulfid-Harzzusammensetzung 0,04 Massen-% oder mehr beträgt, und
die Polyarylensulfid-Harzzusammensetzung einen Form-Gegenstand bereitstellt, bei dem der Mittelwert einer Schrumpfrate in der Harzflussrichtung und einer Schrumpfrate in der Querrichtung zum Harzfluss 0,60 % oder weniger beträgt und eine Oberflächenrauhigkeit als arithmetisches Mittel der Rauhigkeit Ra gemäß JIS B 0601 0,13 $\mu$m oder weniger ist, wenn der Form-Gegenstand in der Abmessung von 80 mm x 80 mm x 2 mm mit einer Form, die eine Oberflächenrauhigkeit von 0,05 $\mu$m als arithmetisches Mittel der Rauhigkeit Ra gemäß JIS B 0601 aufweist, unter den Bedingungen einer Zylindertemperatur von 320°C, einer Formtemperatur von 150°C und einem Haltedruck von 60 MPa spritzgegossen wird.

**2.** Polyarylensulfid-Harzzusammensetzung für das Einsatzformen nach Anspruch 1, die einen Form-Gegenstand bereitstellt, bei dem der Mittelwert der Schrumpfrate in Richtung des Harzflusses und der Schrumpfrate in Querrichtung zum Harzfluss 0,44 % oder weniger beträgt und die Oberflächenrauheit als arithmetisches Mittel Ra 0,12 $\mu$m oder weniger ist, wenn der Form-Gegenstand in der Abmessung von 80 mm x 80 mm x 2 mm mit einer Form, die eine Oberflächenrauhigkeit von 0,05 $\mu$m als arithmetisches Mittel der Rauhigkeit Ra aufweist, unter den Bedingungen einer Zylindertemperatur von 320°C, einer Formtemperatur von 150°C und einem Haltedruck von 60 MPa spritzgegossen wird.

**3.** Polyarylensulfid-Harzzusammensetzung für das Einsatzformen nach Anspruch 1 oder 2, wobei die mittlere Teilchengröße (50 %d) des (B) pulverförmigen oder granulären Füllstoffs 1 bis 400 $\mu$m beträgt, gemessen durch das Laserbeugungs-/ Streuungsverfahren.

**4.** Polyarylensulfid-Harzzusammensetzung für das Einsatzformen nach einem der Ansprüche 1 bis 3, wobei der (B) pulverförmige oder granuläre Füllstoff Glasperlen oder Calciumcarbonat umfasst.

**5.** Polyarylensulfid-Harzzusammensetzung für das Einsatzformen nach einem der Ansprüche 1 bis 4, wobei (C) der faserförmige Füllstoff Glasfasern umfasst.

**6.** Polyarylensulfid-Harzzusammensetzung für das Einsatzformen nach einem der Ansprüche 1 bis 5, wobei das (D) Epoxy-Gruppen enthaltende Copolymer auf Olefinbasis eine Struktureinheit umfasst, die von (Meth)acrylsäureester abgeleitet ist.

7. Polyarylensulfid-Harzzusammensetzung für das Einsatzformen nach einem der Ansprüche 1 bis 6, die weiter eine oder mehrere (E) Silicium-Verbindungen, ausgewählt aus Siliconöl und Siliconkautschuk, umfasst.

8. Polyarylensulfid-Harzzusammensetzung für das Einsatzformen nach einem der Ansprüche 1 bis 7, wobei das (D) Epoxy-Gruppen enthaltende Copolymer auf Olefinbasis eines oder mehrere, ausgewählt aus Glycidylmethacrylat-Pfropf-modifiziertem Ethylen-Polymer, Ethylen-Glycidylmethacrylat-Copolymer und Ethylen-Glycidylmethacrylat-Methylacrylat-Copolymer, ist.

9. Polyarylensulfid-Harzzusammensetzung für das Einsatzformen nach einem der Ansprüche 1 bis 8, wobei das Einsatzformen mit einem Einsatzelement, hergestellt aus Metall, Glas oder Keramik, durchgeführt wird.

10. Einsatzgeformter Gegenstand, integral geformt mit einem Einsatzteil durch Einsatzformen unter Verwendung der Polyarylensulfid-Harzzusammensetzung nach einem der Ansprüche 1 bis 8.

11. Einsatzgeformter Gegenstand nach Anspruch 10, wobei das Einsatzteil aus Metall, Glas oder Keramik hergestellt ist.

12. Einsatzgeformter Gegenstand nach Anspruch 10 oder 11, der eine Funktion zum Blockieren eines Gases oder einer Flüssigkeit aufweist.

**Revendications**

1. Composition de résine de poly(sulfure d'arylène) pour un moulage sur prisonnier comprenant (A) une résine de poly(sulfure d'arylène), (B) une charge pulvérulente ou granulaire, (C) une charge fibreuse, et (D) un copolymère à base d'oléfine contenant un groupe époxy, dans laquelle
la résine de poly(sulfure d'arylène (A) comprend des groupes terminaux carboxyle et est composée d'un motif répétitif -(Ar-S)-, dans lequel "Ar" représente un groupe arylène, dans lequel le groupe arylène est au moins l'un choisi dans le groupe constitué par un groupe p-phénylène, un groupe m-phénylène, un groupe o-phénylène, un groupe p,p'-diphénylène-sulfone, un groupe p,p'-biphénylène, un groupe p,p'-diphénylène-éther, un groupe p,p'-diphénylène-carbonyle, et un groupe naphtalène, et dans lequel le groupe arylène "Ar" n'est pas un groupe phénylène substitué,
le rapport X/Y de la masse X de la charge pulvérulente ou granulaire (B) sur la masse Y de la charge fibreuse est supérieure à 1,5 et de 15,0 ou moins,
la longueur de fibre moyenne en nombre de la charge fibreuse (C) est de 1 à 5 mm,
le copolymère à base d'oléfine contenant un groupe époxy (D) comprend un motif structurel dérivé d'une $\alpha$-oléfine et un motif structurel dérivé d'un ester glycidylique d'un acide à insaturation $\alpha$, $\beta$,
la proportion de la masse du motif structurel dérivé d'un ester glycidylique d'un acide à insaturation $\alpha$, $\beta$ par rapport à la masse totale de la composition de résine de poly(sulfure d'arylène) est de 0,04 % en masse ou plus, et
la composition de résine de poly(sulfure d'arylène) donne un article moulé dans lequel la valeur moyenne du taux de retrait dans la direction de l'écoulement de la résine et du taux de retrait dans la direction transversale à l'écoulement de la résine est de 0,60 % ou moins, et la rugosité de surface sous forme de rugosité moyenne arithmétique Ra conformément à la norme JIS B 0601, est de 0,13 $\mu$m ou moins quand l'article moulé ayant des dimensions de 80 mm x 80 mm x 2 mm est moulé par injection avec un moule ayant une rugosité de surface de 0,05 $\mu$m, sous forme de rugosité moyenne arithmétique Ra conformément à la norme JIS B 0601 dans des conditions d'une température de cylindre de 320°C, d'une température de moule de 150°C, et d'une pression de maintien de 60 MPa.

2. Composition de résine de poly(sulfure d'arylène) pour un moulage sur prisonnier selon la revendication 1, donnant un article moulé dans lequel la valeur moyenne du taux de retrait dans la direction de l'écoulement de la résine et du taux de retrait dans la direction transversale à l'écoulement de la résine est de 0,44 % ou moins, et la rugosité de surface sous forme de rugosité moyenne arithmétique Ra est de 0,12 $\mu$m ou moins quand l'article moulé ayant des dimensions de 80 mm x 80 mm x 2 mm est moulé par injection avec un moule ayant une rugosité de surface de 0,05 $\mu$m, sous forme de rugosité moyenne arithmétique Ra dans des conditions d'une température de cylindre de 320°C, d'une température de moule de 150°C, et d'une pression de maintien de 60 MPa.

3. Composition de résine de poly(sulfure d'arylène) pour un moulage sur prisonnier selon la revendication 1 ou 2, dans laquelle la taille de particule moyenne (50 % d) de la charge pulvérulente ou granulaire (B) est de 1 à 400 $\mu$m, telle que mesurée par le procédé de diffraction/ diffusion laser.

4. Composition de résine de poly(sulfure d'arylène) pour un moulage sur prisonnier selon l'une quelconque des revendications 1 à 3, dans laquelle la charge pulvérulente ou granulaire (B) comprend des perles de verre ou du carbonate de calcium.

5. Composition de résine de poly(sulfure d'arylène) pour un moulage sur prisonnier selon l'une quelconque des revendications 1 à 4, dans laquelle la charge fibreuse (C) comprend des fibres de verre.

6. Composition de résine de poly(sulfure d'arylène) pour un moulage sur prisonnier selon l'une quelconque des revendications 1 à 5, dans laquelle le copolymère à base d'oléfine contenant un groupe époxy (D) comprend un motif structurel dérivé d'ester d'acide (méth)acrylique.

7. Composition de résine de poly(sulfure d'arylène) pour un moulage sur prisonnier selon l'une quelconque des revendications 1 à 6, comprenant en outre un ou plusieurs composés siliconés (E) choisis parmi une huile de silicone et un caoutchouc de silicone.

8. Composition de résine de poly(sulfure d'arylène) pour un moulage sur prisonnier selon l'une quelconque des revendications 1 à 7, dans laquelle le copolymère à base d'oléfine contenant un groupe époxy (D) est un ou plusieurs choisis parmi un polymère d'éthylène modifié par greffage de méthacrylate de glycidyle, un copolymère d'éthylène-méthacrylate de glycidyle, et un copolymère d'éthylène-méthacrylate de glycidyle-acrylate de méthyle.

9. Composition de résine de poly(sulfure d'arylène) pour un moulage sur prisonnier selon l'une quelconque des revendications 1 à 8, dans laquelle le moulage sur prisonnier est effectué avec un élément d'insertion fait de métal, de verre ou de céramique.

10. Article moulé sur prisonnier moulé solidairement avec un élément d'insertion par moulage sur prisonnier utilisant la composition de résine de poly(sulfure d'arylène) selon l'une quelconque des revendications 1 à 8.

11. Article moulé sur prisonnier selon la revendication 10, dans lequel l'élément d'insertion est fait de métal, de verre ou de céramique.

12. Article moulé sur prisonnier selon la revendication 10 ou 11, ayant une fonction pour bloquer un gaz ou un liquide.

FIG. 1

(a)

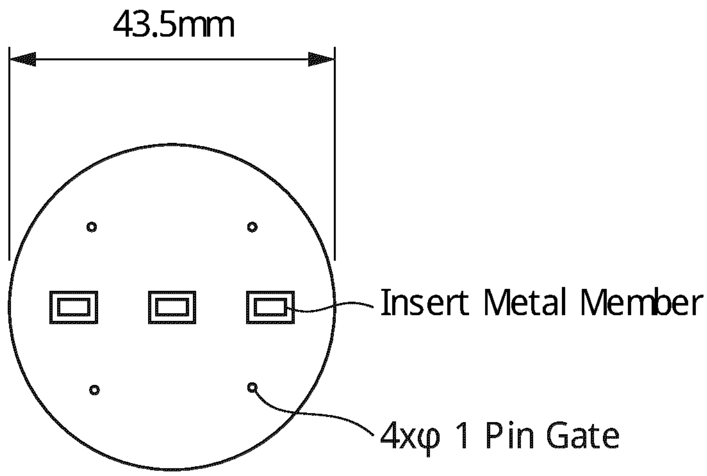
43.5mm
Insert Metal Member
4xφ 1 Pin Gate

(b)

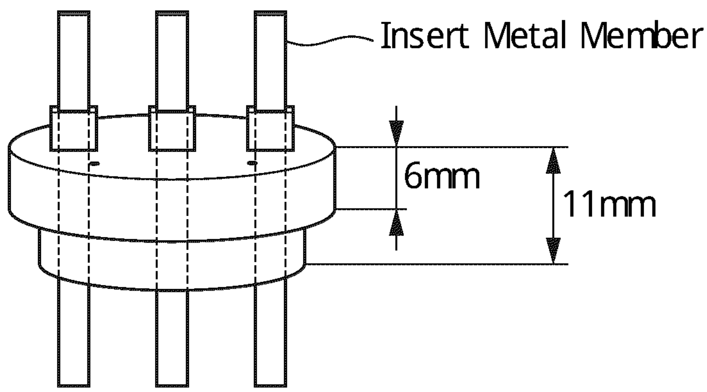
Insert Metal Member
6mm
11mm

FIG. 2

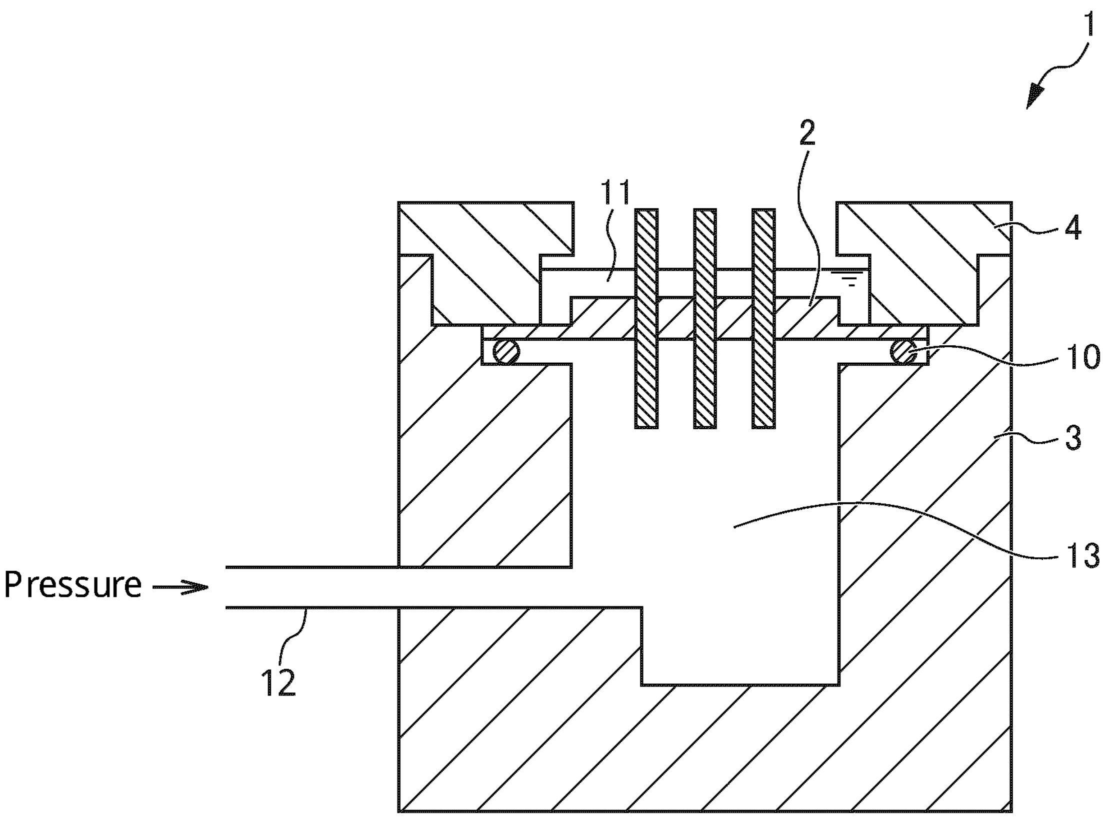

FIG. 3

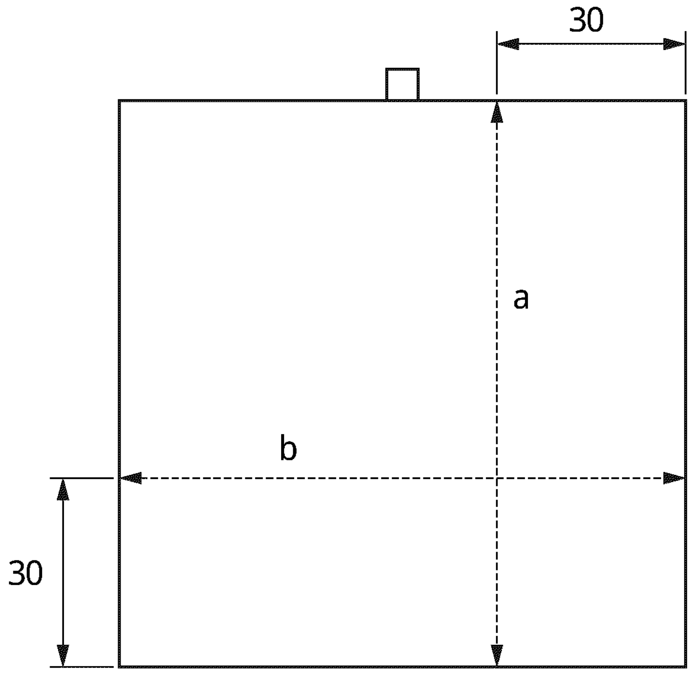


FIG. 4

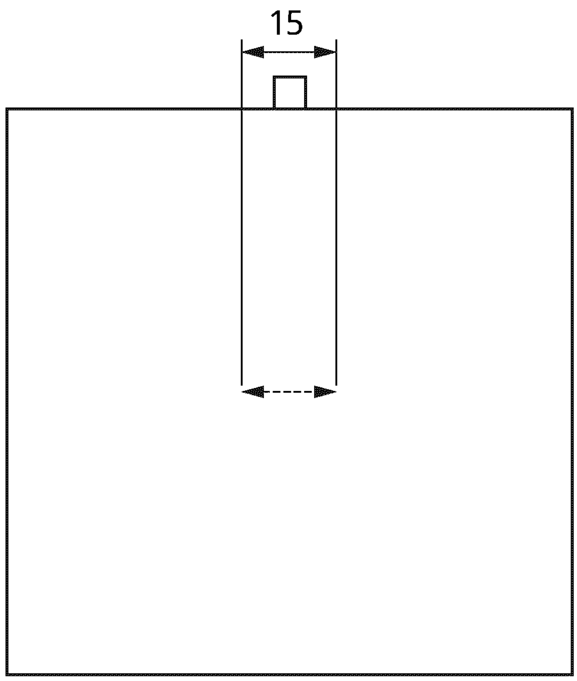

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014133407 A
- JP 2011016942 A
- JP 2000218935 A
- JP 2001225352 A
- JP H142110 B